(19) Europäisches Patentamt
European Patent Office
Office européen des brevets

(11) **EP 2 439 841 A2**

(12) **EUROPÄISCHE PATENTANMELDUNG**

(43) Veröffentlichungstag:
**11.04.2012 Patentblatt 2012/15**

(51) Int Cl.:
*H02P 6/16* (2006.01)

(21) Anmeldenummer: **11182923.0**

(22) Anmeldetag: **27.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.10.2010 DE 102010042134**

(71) Anmelder: **Robert Bosch GmbH
70442 Stuttgart (DE)**

(72) Erfinder: **Daemmrich, Uwe
75428 Illingen (DE)**

(54) **Elektromotor mit einer Rotorpositionserfassung**

(57) Die Erfindung betrifft eine Steuereinheit für einen Elektromotor, insbesondere einen elektronisch kommutierten Elektromotor. Der Elektromotor weist einen Stator und einen insbesondere permanentmagnetisch ausgebildeten Rotor auf. Die Steuereinheit weist einen Eingang für ein eine Rotorposition des Rotors repräsentierendes Rotorpositionssignal und einen Ausgang zum Verbinden mit dem Stator auf und ist ausgebildet, den Stator, insbesondere Statorspulen des Stators, in Abhängigkeit des Rotorpositionssignals zum Drehbewegen des Rotors zu anzusteuern. Erfindungsgemäß ist die Steuereinheit bevorzugt ausgebildet, die in Abhängigkeit der Rotorpositionssignale erfasste Rotorposition in Abhängigkeit einer Häufigkeit eines Übereinstimmens mit einem vorbestimmten Rotorpositionssignal insbesondere als wahrscheinlichstes Erfassungsergebnis der Rotorpositionserfassung mittels einer Monte-Carlo-Methode zu ermitteln.

**Fig. 1**

EP 2 439 841 A2

**Beschreibung**

Stand der Technik

Die Erfindung betrifft eine Steuereinheit für einen Elektromotor, insbesondere einen elektronisch kommutierten Elektromotor. Der Elektromotor weist einen Stator und einen insbesondere permanentmagnetisch ausgebildeten Rotor auf. Die Steuereinheit weist einen Eingang für ein eine Rotorposition des Rotors repräsentierendes Rotorpositionssignal und einen Ausgang zum Verbinden mit dem Stator auf und ist ausgebildet, den Stator, insbesondere Statorspulen des Stators, in Abhängigkeit des Rotorpositionssignals zum Drehbewegen des Rotors zu anzusteuern.

Bei aus dem Stand der Technik bekannten elektronisch kommutierten Elektromotoren, insbesondere Stellmotoren, besteht das Problem, dass Fertigungstoleranzen und während eines Betriebes des Elektromotors auftretende Veränderungen eine Kalibrierung der Rotorpositionserfassung verstellen. Dadurch wird der Stator, insbesondere die Statorspulen des Elektromotors während eines Betriebes nicht mehr in korrekter Weise kommutiert.

Offenbarung der Erfindung

Erfindungsgemäß ist die Steuereinheit bevorzugt ausgebildet, die in Abhängigkeit der Rotorpositionssignale erfasste Rotorposition in Abhängigkeit einer Häufigkeit eines Übereinstimmens mit einem vorbestimmten Rotorpositionssignal insbesondere als wahrscheinlichstes Erfassungsergebnis der Rotorpositionserfassung, bevorzugt mittels einer Monte-Carlo-Methode zu ermitteln. Weiter bevorzugt ist die Steuereinheit ausgebildet, den Stator in Abhängigkeit der so ermittelten Rotorposition anzusteuern, weiter bevorzugt zu bestromen. Weiter bevorzugt ist die Steuereinheit ausgebildet, eine Abweichung der mittels des Rotorpositionssensors erfassten Rotorposition in Abhängigkeit der Häufigkeit eines Übereinstimmens mit einem vorbestimmten Rotorpositionssignal, bevorzugt mittels der Monte-Carlo-Methode zu ermitteln. Weiter bevorzugt ist die Steuereinheit ausgebildet, die erfasste Rotorposition in Abhängigkeit der ermittelten Abweichung zu korrigieren.

Dadurch kann vorteilhaft erreicht werden, dass fehlerhaft erfasste Rotorpositionen des Rotors zum Ansteuern nicht verwendet werden.

Die Erfindung betrifft auch einen Elektromotor mit der Steuereinheit der vorbeschriebenen Art, insbesondere einen elektronisch kommutierten Elektromotor. Der Elektromotor weist einen Stator und einen insbesondere permanentmagnetisch ausgebildeten Rotor auf. Der Elektromotor weist auch wenigstens einen Rotorpositionssensor, bevorzugt wenigstens zwei Rotorpositionssensoren auf. Der Rotorpositionssensor ist ausgebildet, eine Rotorposition des Rotors zu erfassen und ein die Rotorposition repräsentierendes Rotorpositionssignal zu erzeugen. Der Elektromotor weist auch eine Steuereinheit auf, wobei die Steuereinheit mit dem Stator wirkverbunden und ausgebildet ist, den Stator, insbesondere Statorspulen des Stators, in Abhängigkeit des Rotorpositionssignals zum Drehbewegen des Rotors zu anzusteuern.

Der Elektromotor ist beispielsweise ein Stellmotor. Der Stellmotor ist bevorzugt ausgebildet, den Rotor in wenigstens eine vorbestimmte Winkelstellung des Rotors vorwärts und/oder rückwärts zu bewegen.

Die Steuereinheit ist bevorzugt ausgebildet, den Stator in Abhängigkeit des Rotorpositionssignals zum Drehbewegen des Rotors zu bestromen. Dazu ist die Steuereinheit mit einer Leistungsendstufe verbunden, welche ausgebildet ist, die Statorspulen in Abhängigkeit von von der Steuereinheit erzeugten Steuersignalen - beispielsweise pulsweitenmodulierten Steuersignalen - zu bestromen.

In einer bevorzugten Ausführungsform ist die Steuereinheit ausgebildet, das Rotorpositionssignal mit einer Abtastfrequenz abzutasten, wobei die Abtastfrequenz derart größer oder kleiner ist als eine Umlauffrequenz des Rotors, dass sich eine Schwebung aus der Abtastung und dem Rotorpositionssignal ergibt. Die Schwebung ist bevorzugt kleiner oder gleich eines durch Erfassungsfehler und/oder Bauteiltoleranzen des Elektromotors vorbestimmten Schwankungsintervalls. So kann vorteilhaft eine Markierung eines mit gleichbleibender Umdrehungsfrequenz drehenden Motors sicher erfasst werden. Weiter vorteilhaft kann das so abgetastete Rotorpositionssignal auf diese Weise normalverteilte Schwankungen - verursacht durch Prozessverarbeitungsschwankungen einer Signalverarbeitung - innerhalb des Schwankungsintervalls als Gaussverteilter Abtastzeitpunkt für die Rotorpositionsermittlung vorgeben.

In einer bevorzugten Ausführungsform ist die Steuereinheit ausgebildet, das Rotorpositionssignal mit einer Abtastfrequenz, bevorzugt gleich der Rotorumlauffrequenz, abzutasten. Weiter bevorzugt ist die Steuereinheit ausgebildet, eine Schwankung der Abtastfrequenz, bevorzugt in eines vorbestimmten Schwankungsintervall in Abhängigkeit einer mittels eines Zufallszahlengenerators erzeugten Zahlenwerts zu erzeugen. Weiter bevorzugt ist die Steuereinheit ausgebildet, die Schwankung für jeden Abtastwert mittels des Zufallszahlengenerators zu erzeugen. So kann vorteilhaft eine - bekannte - gleichverteilte Schwankung der Abtastzeitpunkte erzeugt werden. Zeitlich aufeinander folgende Abtastwerte können so zueinander verschiedene, zufallsgesteuerte Zeitabstände aufweisen. Bevorzugt ist die Steuereinheit ausgebildet, für jeden Abtastwert einen einer vorbestimmten Abtastfrequenz entsprechenden Sollzeitpunkt festzulegen und davon ausgehend eine zeitliche Verschiebung des Abtastzeitpunktes - vorwärts und/oder rückwärts - in Abhängigkeit eines Ergebnisses des Zufallszahlengenerators zu erzeugen. Die vorbestimmte Abtastfrequenz repräsentiert dabei die bevorzugt konstante Motordrehzahl.

Bevorzugt ist der Zufallszahlengenerator ausgebildet, die Zeitdauer des Abtastintervalls zwischen Null und einer Drehperiode des Rotors zu erzeugen. Weiter bevorzugt sind die von dem Zufallszahlengenerator erzeugbaren Abtastzeitintervalle zueinander gleichwahrscheinlich verteilt.

In einer bevorzugten Ausführungsform des Elektromotors weist der Elektromotor wenigstens zwei jeweils ein Rotorpositionssignal erzeugende Rotorpositionssensoren auf. Bevorzugt weist die Steuereinheit einen Eingang für wenigstens zwei Rotorpositionssignale, jeweils erzeugt von zueinander verschiedenen Rotorpositionssensoren auf. Die Steuereinheit ist in dieser Ausführungsform ausgebildet, wenigstens ein Erfassungsmuster, insbesondere wenigstens einen Erfassungsmuster-Datensatz für zueinander verschiedene Winkelstellungen des Rotors entlang eines Rotorumlaufes vorrätig zu halten. Bevorzugt repräsentiert jedes Erfassungsmuster Rotorpositionssignale der Rotorpositionssensoren zu einer vorbestimmten Winkelstellung des Rotors. Die Steuereinheit ist bevorzugt ausgebildet, die Rotorposition des Rotors in Abhängigkeit der Erfassungsmuster, insbesondere der Erfassungsmuster-Datensätze zu ermitteln. Weiter bevorzugt ist die Steuereinheit ausgebildet, die Rotorposition des Rotors in Abhängigkeit eines Übereinstimmens eines durch die Rotorpositionssignale repräsentierten Erfassungsmusters mit dem Erfassungsmuster-Datensatz zu ermitteln.

Bevorzugt ist die Steuereinheit ausgebildet, die Rotorposition in Abhängigkeit einer Häufigkeit, insbesondere einer Häufigkeit des Übereinstimmens eines durch die Rotorpositionssignale repräsentierten Erfassungsmusters mit dem Erfassungsmuster-Datensatz in einem vorbestimmten Zeitintervall zu ermitteln. Je häufiger ein Erfassungsmuster auftritt, desto wahrscheinlicher kann ein dem Erfassungsmuster entsprechender Betriebszustand des Elektromotors angenommen werden.

Mittels der Erfassungsmuster-Datensätze können vorteilhaft richtige und fehlerhafte oder falsche Betriebszustände des Elektromotors, insbesondere der Kalibrierung der Rotorpositionssensoren abgespeichert werden. Weiter vorteilhaft kann mittels der Monte-Carlo-Methode eine Richtig-oder-Falsch-Entscheidung zu einem Kalibrierungszustand der Rotorpositionssensoren getroffen werden.

In einer bevorzugten Ausführungsform ist die Steuereinheit ausgebildet, für wenigstens eine Winkelstellung wenigstens ein eine fehlerhafte Rotorpositionserfassung repräsentierenden Erfassungsmuster-Datensatz vorrätig zu halten. Die Steuereinheit ist weiter ausgebildet, in Abhängigkeit einer Häufigkeit, insbesondere einer Häufigkeit eines Übereinstimmens in einem vorbestimmten Zeitintervall des durch die Rotorpositionssignale repräsentierten Erfassungsergebnisses mit dem die fehlerhafte Rotorpositionserfassung repräsentierenden Erfassungsmuster-Datensatz, die erfasste Rotorposition um einen vorbestimmten Winkel zu korrigieren. So kann vorteilhaft in Abhängigkeit eines Schwellwertes einer Häufigkeit mittels eines Klassifizierers eine Entscheidung hinsichtlich einer Gültigkeit eines Rotorpositionserfassungsergebnisses der Rotorpositionssensoren getroffen werden.

Bei einem Stellmotor können so feste Winkelschritte für eine Rotorbewegung vorwärts oder rückwärts - gesteuert durch die Steuereinheit - durchgeführt werden.

Bevorzugt weist die Steuereinheit dazu einen Klassifizierer auf, welcher ausgebildet ist, in Abhängigkeit wenigstens eines die Häufigkeit eines fehlerhaften Erfassungsmusters repräsentierenden Schwellwertes ein Ausgangssignal zu erzeugen, welches eine Gültigkeit, insbesondere eine Rotorpositionserfassung durch die Rotorpositionssensoren repräsentiert. Weiter bevorzugt ist die Steuereinheit ausgebildet, in Abhängigkeit des die Gültigkeit repräsentierenden Ausgangssignals eine Kalibrierung der Rotorpositionssensoren zu korrigieren.

Die Steuereinheit ist bevorzugt ausgebildet, eine Kalibrierung von wenigstens einem Rotorpositionssensor oder zwei zueinander verschiedenen Rotorpositionssensoren in Abhängigkeit des die fehlerhafte Rotorpositionserfassung repräsentierenden Erfassungsmusters, um einen vorbestimmten Winkel, bevorzugt einen Winkelschritt zwischen zwei Winkelstellungen, zu korrigieren. So können vorteilhaft mittels der Monte-Carlo-Methode fehlerhafte Betriebszustände erfasst und zwei zueinander verschiedene Rotorpositionssensoren zueinander kalibriert werden, oder ein Rotorpositionssensor in einer bestimmten Kalibrierstellung kalibriert werden. So kann vorteilhaft einer der zwei zueinander verschiedenen Rotorpositionssensoren ein Inkrementalzähler sein, welcher ausgebildet ist, eine Drehbewegung des Rotors in Winkelschritten zu erfassen. Die Winkelschritte können beispielsweise eine Vorwärts- und/oder Rückwärtsbewegung des Rotors repräsentieren.

Der zweite der zwei zueinander verschiedenen Rotorpositionssensoren ist beispielsweise ein Hallgeber, welcher ausgebildet ist, die Rotorposition absolut in wenigstens einer Winkelstellung zu erfassen. Mittels der Monte-Carlo-Methode kann so vorteilhaft eine Übereinstimmung der Rotorpositionserfassungsergebnisse des zweiten und des ersten Rotorpositionssensors zueinander überprüft werden.

Der Elektromotor weist beispielsweise drei voneinander verschiedene Hallsensoren auf, welche jeweils ausgebildet sind, wenigstens eine absolute Winkelposition des Rotors zu erfassen. Der Elektromotor weist beispielsweise wenigstens zwei Rotorpositionssensoren auf, welche jeweils als Inkrementzähler ausgebildet sind.

Die als Inkrementzähler ausgebildeten Rotorpositionssensoren sind jeweils bevorzugt ausgebildet, die Rotorposition mit einer größeren Frequenz zu erfassen als die die Rotorposition absolut erfassenden Rotorpositionssensoren. So erreichen die als Inkrementzähler ausgebildeten Rotorpositionssensoren eine höhere Erfassungsgenauigkeit der Rotorposition als die absolut erfassenden Rotorpositionssensoren.

Die Erfindung betrifft auch eine Steuereinheit für einen Elektromotor, insbesondere einen Elektromotor der eingangsgenannten Art. Die Steuereinheit weist wenigstens einen Eingang für ein Rotorpositionssignal und einen Ausgang zum Verbinden mit einem Stator, insbesondere Statorspulen des Elektromotors auf.

Die Erfindung betrifft auch ein Verfahren zum Betreiben eines elektronisch kommutierten Elektromotors mit einem Rotor und einem Stator, bei dem eine Rotorposition des Rotors mittels wenigstens eines Rotorpositionssensors erfasst wird und ein die Rotorposition repräsentierendes Rotorpositionssignal erzeugt wird und der Stator in Abhängigkeit des Rotorpositionssignals zum Drehbewegen des Rotors angesteuert wird. Bei dem Verfahren wird die Rotorposition des Rotors in Abhängigkeit einer Wahrscheinlichkeit eines Auftretens eines vorbestimmten Rotorpositionssignalmusters des Rotorpositionssignals, insbesondere einer Häufigkeit eines Übereinstimmens mit einem vorbestimmten Rotorpositionssignal (29, 30) insbesondere als wahrscheinlichstes Erfassungsergebnis der Rotorpositionserfassung - bevorzugt mittels einer Monte-Carlo-Methode - ermittelt.

Bevorzugt wird das Rotorpositionssignal mit einer Abtastfrequenz abgetastet, die derart größer oder kleiner ist als eine Umlauffrequenz des Rotors, dass sich eine Schwebung aus der Abtastung und dem Rotorpositionssignal ergibt, die in einem durch Erfassungsfehler und/oder Bauteiltoleranzen des Elektromotors vorbestimmten Schwankungsintervall liegt.

Bevorzugt wird bei dem Verfahren das Rotorpositionssignal mit einer Abtastfrequenz abgetastet und ein Abtastzeitpunkt einer einen Abtastwert erzeugenden Abtastung in Abhängigkeit eines zufallserzeugten Zahlenwertes zeitlich vor- oder zurückverlegt. So kann die zuvor beschriebene Schwankung der Abtastfrequenz erzeugt werden. Der zufallserzeugte Zahlenwert ist beispielsweise durch ein Ausgangssignal eines Zufallszahlengenerators repräsentiert.

In einer bevorzugten Ausführungsform weist der Elektromotor wenigstens zwei jeweils ein Rotorpositionssignal erzeugende Rotorpositionssensoren (12, 14, 16, 18, 20) auf. Weiter bevorzugt wird wenigstens ein Erfassungsmuster-Datensatz für eine Winkelstellung des Rotors (5) entlang eines Rotorumlaufes vorrätig gehalten, wobei der Erfassungsmuster-Datensatz (29) Rotorpositionssignale der Rotorpositionssensoren zu der vorbestimmten Winkelstellung des Rotors repräsentiert, und der Rotor in Abhängigkeit einer Häufigkeit eines Übereinstimmens des durch die Rotorpositionssignale repräsentierten Erfassungsergebnisses mit dem Erfassungsmuster-Datensatz (29) angesteuert. Bevorzugt wird für die Winkelstellung wenigstens ein eine fehlerhafte Rotorpositionserfassung repräsentierender Erfassungsmuster-Datensatz vorrätiggehalten und in Abhängigkeit einer Häufigkeit eines Übereinstimmens des durch die Rotorpositionssignale repräsentierten Erfassungsergebnisses mit dem die fehlerhafte Rotorpositionserfassung repräsentierenden Erfassungsmuster-Datensatz die erfasste Rotorposition um einen vorbestimmten Rotorwinkel korrigiert, und der Stator in Abhängigkeit der korrigierten Rotorposition angesteuert.

Die Erfindung wird nun im Folgenden anhand von Figuren und weiteren Ausführungsbeispielen beschrieben. Weitere Ausführungsbeispiele ergeben sich aus den in den Figuren und in den abhängigen Ansprüchen beschriebenen Merkmalen.

Figur 1 zeigt ein Ausführungsbeispiel für einen Elektromotor mit einer Rotorpositionserfassung;

Figur 2 zeigt ein Ausführungsbeispiel für eine Anordnung von Rotorpositionsmarkierungen an einem Rotor eines Elektromotors;

Figur 3 zeigt ein Diagramm, in dem beispielhafte Erfassungsmuster-Datensätze für korrekte und falsche Rotorpositionserfassungen dargestellt sind.

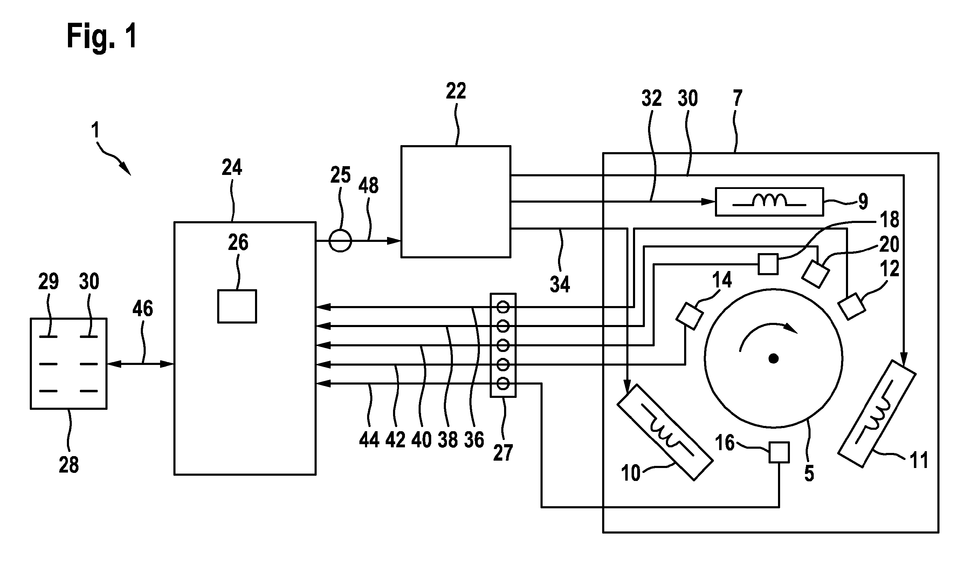

Figur 1 zeigt ein Ausführungsbeispiel für einen Elektromotor 1. Der Elektromotor 1 ist in diesem Ausführungsbeispiel ein elektronisch kommutierter Elektromotor mit einem insbesondere permanentmagnetisch ausgebildeten Rotor 5. Der Elektromotor 1 weist zusätzlich zu dem Rotor 5 auch einen Stator 7 auf. Der Stator 7 weist eine oder mehrere Statorspulen, in diesem Ausführungsbeispiel drei Statorspulen 9, 10 und 11 auf. Die Statorspulen 9, 10, und 11 sind beispielsweise in Sternschaltung miteinander verbunden. Dazu können nicht mit der Steuereinheit verbundene Anschlüsse der Statorspulen miteinander verbunden sein. Der Elektromotor 1 weist auch Rotorpositionssensoren 12, 14, 16, 18 und 20 auf. Die Rotorpositionssensoren sind beispielsweise als Hall-Sensoren ausgebildet.

Der Elektromotor 1 weist auch eine Steuereinheit 24 auf. Die Steuereinheit 24 ist ausgangsseitig über einen Ausgang 25 und die Verbindungsleitung 48 mit einer Leistungsendstufe 22 verbunden. Die Leistungsendstufe 22 ist ausgangsseitig mit den Statorspulen verbunden. In diesem Ausführungsbeispiel ist die Leistungsendstufe 22 über eine Verbindungsleitung 30 mit der Statorspule 11, über eine Verbindungsleitung 32 mit der Statorspule 9 und über eine Verbindungsleitung 34 mit der Statorspule 10 verbunden. Die Steuereinheit 24 ist ausgebildet, die Leistungsendstufe 22 über den Ausgang 25 und die Verbindungsleitung 48 zum Bestromen der Statorspulen in Abhängigkeit wenigstens eines Rotorpositionssignals anzusteuern. Dazu weist die Steuereinheit 24 einen Eingang 27 für das Rotorpositionssignal auf und ist über den Eingang 27 mit den Rotorpositionssensoren 12, 14, 16, 18 und 20 verbunden. Die Steuereinheit 24 kann zum Bestromen des Stators 7 entsprechende Steuersignale erzeugen, welche jeweils einen einer Statorspule zugeordneten Halbleiterschalter der Leistungsendstufe 22 ansteuern. Die Steuereinheit 24 ist ausgebildet, die Leistungsendstufe 22 derart anzusteuern, dass die Statorspulen von der Leistungsendstufe 22 zum Erzeugen eines magnetischen Drehfeldes bestromt werden.

Die Steuereinheit 24 ist auch über eine bidirektionale Verbindungsleitung 46 mit einem Speicher 28 verbunden. Der Speicher 28 ist ausgebildet, wenigstens einen Erfassungsmuster-Datensatz für zueinander verschiedene Winkelstellungen des Rotors entlang eines Rotorumlaufes vorrätig zu halten. Von den im Speicher 28 dargestellten Erfassungsmuster-Datensätzen ist der Erfassungsmuster-Datensatz 29 für eine korrekte Rotorpositionserfassung und ein Erfassungsmuster-Datensatz 30 für eine fehlerhafte Rotorpositionserfassung beispielhaft bezeichnet. Die Steuereinheit 24 ist ausgebildet, für zueinander verschiedene Winkelstellungen des Rotors 5 entlang eines Rotorumlaufes jeweils einen Erfassungsmuster-Datensatz zu erzeugen, wobei der Erfassungsmuster-Datensatz die Rotorpositionssignale der Rotorpositionssensoren 12, 14, 16, 18 und 20 - beispielsweise in digitaler Form - repräsentiert und diesen über die Verbindungsleitung 46 im Speicher 28 abzuspeichern. Im Speicher 28 sind somit für jede Winkelstellung des Rotors - beispielsweise in 10-Grad-Schritten - zueinander verschiedene Erfassungsmuster-Datensätze abgespeichert.

Die Rotorpositionssensoren 18 und 20 sind in diesem Ausführungsbeispiel jeweils als Inkrementalzähler ausgebildet, welche jeweils ausgebildet sind, eine Rotorpositionsänderung, insbesondere einen Rotorwinkel der Rotorpositionsänderung zu erfassen und ein die Rotorpositionsänderung repräsentierendes Rotorpositionssignal zu erzeugen. So kann es beispielsweise während eines Betriebes des Elektromotors, welcher beispielsweise ein Stellmotor ist, durch häufiges Hin- und Herdrehen des Rotors mit zueinander verschiedenen Drehrichtungen und Drehwinkel vorkommen, dass insbesondere durch Bauteiltoleranzen verursacht, die mittels der inkrementalzählenden Rotorpositionssensoren 18 und 20 erfasste Rotorposition nicht mehr mit einer mittels den Rotorpositionssensoren 12, 14 und 16 erfassten Rotorposition übereinstimmt. Die Rotorpositionssensoren 12, 14 und 16 sind beispielsweise zusammen ausgebildet, die Rotorposition des Rotors 5 wenigstens rotorumfangsabschnittsweise absolut zu erfassen. Der Elektromotor 1 kann beispielsweise ausgebildet sein, in dem Speicher 28 Erfassungsmuster-Datensätze vorrätig zu halten, welche jeweils eine fehlerhafte Rotorpositionserfassung für einen vorbestimmten Erfassungswinkel repräsentieren. Während eines Betriebes des Elektromotors kann so eine zeitliche Folge von mittels der Rotorpositionssensoren erzeugten Erfassungsmuster-Datensätze mit zuvor abgespeicherten, und im Speicher 28 vorrätig gehaltenen Erfassungsmuster-Datensätzen verglichen werden. Die Steuereinheit 24 ist dazu ausgebildet, zeitlich aufeinander folgende Erfassungsmuster-Datensätze - welche jeweils die Rotorpositionssignale der Rotorpositionssensoren zu einem Rotorwinkel oder Rotorwinkelintervall repräsentieren - mit den im Speicher 28 vorrätig gehaltenen Erfassungsmuster-Datensätzen zu vergleichen und die Rotorposition des Rotors in Abhängigkeit einer Häufigkeit eines Auftretens von vorbestimmten Erfassungsmuster-Datensätzen - insbesondere in einem vorbestimmten Zeitintervall - zu bestimmen. Weiter kann die Steuereinheit 24 fehlerhafte Rotorpositionserfassungen in Abhängigkeit einer Häufigkeit eines Übereinstimmens des Erfassungsergebnisses mit dem die fehlerhafte Rotorpositionserfassung repräsentierenden Erfassungsmuster-Datensatz, die erfasste Rotorposition um einen vorbestimmten Winkel korrigieren. So kann der Stator in Abhängigkeit der korrigierten Rotorposition angesteuert werden.

Die Steuereinheit 24 kann dazu einen Klassifizierer 26 aufweisen, welcher ausgebildet ist, die in Abhängigkeit der Rotorpositionssignale erzeugten Erfassungsmuster-Datensätze mit den zuvor abgespeicherten Erfassungsmuster-Datensätzen im Speicher 28 zu vergleichen und in Abhängigkeit einer Häufigkeit eines Übereinstimmens mit den zuvor abgespeicherten Erfassungsmuster-Datensätzen zu klassifizieren. Beispielsweise kann in dem Speicher ein Datensatz repräsentierend Häufigkeitsschwellen für jeden Erfassungsmuster-Datensatz vorrätiggehalten sein. So kann beispielsweise ein Erfassungsmuster-Datensatz im Speicher 28 vorrätig gehalten sein, welcher einen Winkelversatz zwischen zwei von zueinander verschiedenen Rotorpositionssensoren erfassten Rotorpositionen zu demselben Rotorwinkel repräsentiert. Je nach Häufigkeit einer Übereinstimmung mit den im Speicher vorrätiggehaltenen, jeweils eine fehlerhafte Rotorpositionserfassung repräsentierenden Erfassungsmuster-Datensätzen kann so eine Nachkalibrierung der Rotorpositionserfassung in Abhängigkeit eines Übereinstimmens, insbesondere zusätzlich in Abhängigkeit eines Überschreitens eines Häufigkeitsschwellwertes, mit einem die fehlerhafte Rotorpositionserfassung repräsentierenden Erfassungsmuster-Datensatz durchgeführt werden. Dazu können die Erfassungsergebnisse der die Rotorposition zusammen - in diesem Beispiel in einem Rotorwinkelabschnitt von 180 Grad - absolut erfassenden Rotorpositionssensoren 12, 14, und 16 als Referenz dienen. Denkbar ist auch eine Kalibrierstellung des Rotors, welche beispielsweise mittels einer ortsfesten Lichtschranke angefahren werden kann, um so eine Referenz zum Abgleich der inkrementellen Rotorpositionserfassung in der Kalibrierstellung durchzuführen.

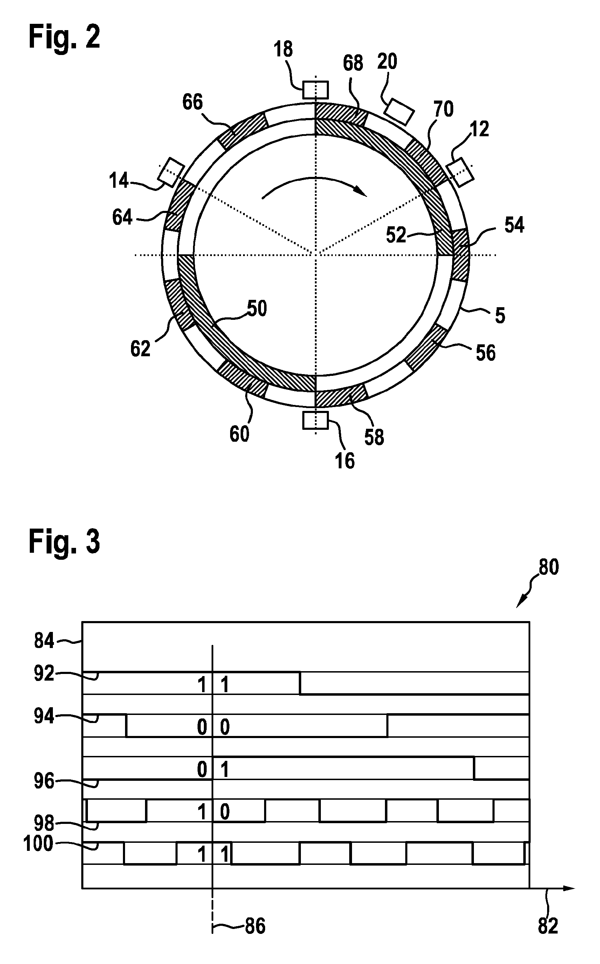

Figur 2 zeigt ein Ausführungsbeispiel für eine Anordnung von Rotorpositionsmarkierungen an einem Rotor, beispielsweise dem in Figur 1 dargestellten Rotor 5. Der Rotor 5 weist entlang eines Rotorumfangs einer Rotorumlaufrichtung zwei Rotorpositionsmarkierungen 50 und 52 auf, welche sich jeweils über einen Umfangsabschnitt des Rotorumfangs erstrecken. Der Umfangsabschnitt der Rotorpositionssensoren 50 und 52 beträgt jeweils ein Viertel eines Rotorumfangs. Die Rotorpositionsmarkierungen 52 und 54 sind jeweils angeordnet, von den Rotorpositionssensoren 12, 14 und 16 erfasst zu werden. Die Rotorpositionssensoren 12, 14 und 16 sind jeweils angeordnet und ausgebildet, nur die Rotorpositionsmarkierungen 50 und 52 zu erfassen. Der Rotor 5 weist auch neun Rotorpositionsmarkierungen 54, 56, 58, 60, 62, 64, 66, 68 und 70 auf. Die Rotorpositionsmarkierungen 54, 56, 58, 60, 62, 64, 66, 68 und 70 erstrecken sich jeweils über einen Umfangsabschnitt des Rotorumfangs des Rotors 5. Der Umfangsabschnitt beträgt jeweils 20 Grad. Die Rotorpositionsmarkierungen sind beispielsweise jeweils durch Permanentmagnete gebildet. Die Rotorpositionssensoren sind beispielsweise durch Hall-Sensoren gebildet, welche jeweils ausgebildet sind, ein Magnetfeld der Rotorpositionssensoren zu erfassen und ein entsprechendes Rotorpositionssignal zu erzeugen.

Figur 3 zeigt ein Diagramm 80. In dem Diagramm 80 sind Rotorpositionssignale der in den Figuren 1 und 2 dargestellten Rotorpositionssensoren dargestellt. Das Diagramm 80 weist eine Abszisse 82 auf, welche einen Rotorwinkel entlang eines Rotorumlaufabschnitts repräsentiert. Das Diagramm 80 weist auch eine Ordinate 84 auf, auf der Signalamplituden der Rotorpositionssignale aufgetragen sind.

Das Diagramm 80 zeigt ein Rotorpositionssignal 92, welches von dem Rotorpositionssensor 16 erfasst worden ist. Das Diagramm 80 zeigt auch ein Rotorpositionssignal 94, welches von dem Rotorpositionssensor 14 erfasst worden ist. Das Rotorpositionssignal 96 ist vom Rotorpositionssensor 12 erfasst worden. Das Diagramm 80 zeigt auch ein Rotorpositionssignal 98, welches vom Rotorpositionssensor 20 erfasst worden ist und ein Rotorpositionssignal 100, welches vom Rotorpositionssensor 18 erfasst worden ist. Die Rotorpositionssignale 98 und 100 weisen entlang des in Diagramm 80 dargestellten Winkelabschnitts eine höhere Wechselfrequenz auf, als die Rotorpositionssignale 92, 94 und 96. Das liegt daran, dass die in Figur 2 dargestellten Rotorpositionsmarkierungen für die Rotorpositionssensoren 20 und 18 entlang des Rotorumlaufes häufiger vertreten sind als die Rotorpositionsmarkierungen, welche von den Rotorpositionssensoren 12, 14 und 16 erfasst werden können..

Das Diagramm 80 zeigt auch eine Schwelle 86, wobei die Rotorpositionssignale rechtsseitig der Schwelle entlang der Abszisse 82 - bis zu einer Änderung wenigstens eines Rotorpositionssignals - ein Erfassungsmuster zu einem vorbestimmten Rotorwinkel repräsentieren. Die Rotorpositionssignale linksseitig der Schwelle 86 repräsentieren zusammen ein Erfassungsmuster, welches einen anderen Erfassungswinkel repräsentiert, als die Rotorpositionssignale rechtsseitig der Schwelle. Die Rotorpositionssignale rechtsseitig der Schwelle repräsentieren beispielsweise den Erfassungswinkel 290 Grad. Die Rotorpositionssignale linksseitig der Schwelle 86 repräsentieren zusammen den Rotorwinkel 300 Grad.

Die folgende Tabelle 1 zeigt einen Überblick der von den Rotorpositionssensoren 12, 14, 16, 18 und 20 erfassten Rotorwinkeln und die entsprechenden Rotorpositionssignale in digitaler Form. Der Rotorwinkel ist in Grad angegeben, die Erfassungsergebnisse der Rotorpositionssensoren sind in den Spalten wie folgt wiedergegeben:

Rotorpositionssensor 12 in Spalte H3, korrekte Erfassung;
Rotorpositionssensor 14 in Spalte H2, korrekte Erfassung;
Rotorpositionssensor 16 in Spalte H1, korrekte Erfassung;
Rotorpositionssensor 20 in Spalte H4, korrekte Erfassung;
Rotorpositionssensor 18 in Spalte H5, korrekte Erfassung;
Rotorpositionssensor 20 in Spalte H4', fehlerhafte Erfassung;
Rotorpositionssensor 18 in Spalte H5', fehlerhafte Erfassung.

Tabelle 1:

| Rotorwinkel | n | H1 | H2 | H3 | H4 | H5 | H4' | H5' |
|---|---|---|---|---|---|---|---|---|
| 0 | 0 | 1 | 0 | 0 | 0 | 0 | 1 | |
| 10 | 0 | 1 | 0 | 0 | 1 | 1 | 1 | |
| 20 | 0 | 1 | 0 | 1 | 1 | 1 | 0 | |
| 30 | 0 | 1 | 1 | 1 | 0 | 0 | 0 | |
| 40 | 0 | 1 | 1 | 0 | 0 | 0 | 1 | |
| 50 | 0 | 1 | 1 | 0 | 1 | 1 | 1 | |
| 60 | 0 | 0 | 1 | 1 | 1 | 1 | 0 | |
| 70 | 0 | 0 | 1 | 1 | 0 | 0 | 0 | |
| 80 | 0 | 0 | 1 | 0 | 0 | 0 | 1 | |
| 90 | 1 | 0 | 1 | 0 | 1 | 1 | 1 | |
| 100 | 1 | 0 | 1 | 1 | 1 | 1 | 0 | |
| 110 | 1 | 0 | 1 | 1 | 0 | 0 | 0 | |
| 120 | 1 | 0 | 0 | 0 | 0 | 0 | 1 | |

| Rotorwinkel | n | H1 | H2 | H3 | H4 | H5 | H4' | H5' |
|---|---|---|---|---|---|---|---|---|
| 130 | 1 | 0 | 0 | 0 | 1 | 1 | 1 | |
| 140 | 1 | 0 | 0 | 1 | 1 | 1 | 0 | |
| 150 | 1 | 1 | 0 | 1 | 0 | 0 | 0 | |
| 160 | 1 | 1 | 0 | 0 | 0 | 0 | 1 | |
| 170 | 1 | 1 | 0 | 0 | 1 | 1 | 1 | |
| 180 | 0 | 1 | 0 | 1 | 1 | 1 | 0 | |
| 190 | 0 | 1 | 0 | 1 | 0 | 0 | 0 | |
| 200 | 0 | 1 | 0 | 0 | 0 | 0 | 1 | |
| 210 | 0 | 1 | 1 | 0 | 1 | 1 | 1 | |
| 220 | 0 | 1 | 1 | 1 | 1 | 1 | 0 | |
| 230 | 0 | 1 | 1 | 1 | 0 | 0 | 0 | |
| 240 | 0 | 0 | 1 | 0 | 0 | 0 | 1 | |
| 250 | 0 | 0 | 1 | 0 | 1 | 1 | 1 | |
| 260 | 0 | 0 | 1 | 1 | 1 | 1 | 0 | |
| 270 | 1 | 0 | 1 | 1 | 0 | 0 | 0 | |
| 280 | 1 | 0 | 1 | 0 | 0 | 0 | 1 | |
| 290 | 1 | 0 | 1 | 0 | 1 | 1 | 1 | |
| 300 | 1 | 0 | 0 | 1 | 1 | 1 | 0 | |
| 310 | 1 | 0 | 0 | 1 | 0 | 0 | 0 | |
| 320 | 1 | 0 | 0 | 0 | 0 | 0 | 1 | |
| 330 | 1 | 1 | 0 | 0 | 1 | 1 | 1 | |
| 340 | 1 | 1 | 0 | 1 | 1 | 1 | 0 | |
| 350 | 1 | 1 | 0 | 1 | 0 | 0 | 0 | |

(fortgesetzt)

Die Tabelle weist in jeder Zeile einen Erfassungsmuster-Datensatz zu einem vorbestimmten Rotorwinkel auf, welcher die entsprechenden Erfassungsergebnisse in den Spalten H1, H2, H3, H4 und H5 umfasst. Die letzten zwei Spalten H4' und H5' der Tabelle zeigen die Erfassungsergebnisse der Rotorpositionssensoren 20 und 18 für zueinander verschiedene Rotorwinkel, welche jeweils zusammen mit den entsprechenden Zeilen der Spalten H1, H2 und H3 fehlerhafte Erfassungsmuster-Datensätze repräsentieren. Sichtbar ist ein Versatz der Erfassungsergebnisse der Rotorpositionssensoren 18 und 20. Die Erfassungsergebnisse der Rotorpositionssensoren 18 und 20 in den Spalten H4 und H5 entsprechen nämlich für die Erfassungswinkel 60, 70 und 80 Grad den Erfassungswinkeln 90, 100 und 110 Grad der fehlerhaften Rotorpositionserfassung der Rotorpositionssensoren 20 und 18, dargestellt in den Spalten H4' und H5'. Je nach zeitlicher Häufigkeit des Auftretens eines fehlerhaften Erfassungsmuster-Datensatzes, welcher eine fehlerhafte Rotorpositionserfassung repräsentiert, kann die in Figur 1 dargestellte Steuereinheit 24 mittels Monte-Carlo-Diskriminierens eine Klassifizierung in fehlerhafte oder korrekte Rotorpositionserfassungen vornehmen.

Eine Trefferhäufigkeit eines Rotorwinkels oder Rotorwinkelintervalls ergibt sich gemäß der Vorschrift

$$\Delta\Phi(i) = \frac{2\Pi \cdot n(i)}{\sum_i n(i)},$$

mit

i = Rotorwinkelintervall umfassend einen Rotorwinkel, beispielsweise aus der Tabelle 1.

$\Delta\Phi(i)$ = Winkelintervall zum Rotorwinkel i

$n(i)$ = Zählergebnis für den Rotorwinkel i.

7

**Patentansprüche**

1.  Steuereinheit (24) für einen Elektromotor (1), insbesondere elektronisch kommutierter Elektromotor (1), wobei der Elektromotor einen Stator (7) und einen Rotor (5) und wenigstens einen Rotorpositionssensor (12, 14, 16, 18, 20) aufweist, wobei der Rotorpositionssensor ausgebildet ist, eine Rotorposition des Rotors (5) zu erfassen und ein die Rotorposition repräsentierendes Rotorpositionssignal zu erzeugen, und die Steuereinheit einen Eingang für das Rotorpositionssignal und einen Ausgang zum Verbinden mit dem Stator aufweist, und ausgebildet ist, den Stator (7) in Abhängigkeit des Rotorpositionssignals zum Drehbewegen des Rotors (5) anzusteuern,
    **dadurch gekennzeichnet, dass**
    die Steuereinheit (24) ausgebildet ist, die Rotorposition des Rotors (5) in Abhängigkeit einer Häufigkeit eines Übereinstimmens mit einem vorbestimmten Rotorpositionssignal, (29, 30) insbesondere als wahrscheinlichstes Erfassungsergebnis der Rotorpositionserfassung mittels einer Monte-Carlo-Methode, zu ermitteln.

2.  Steuereinheit (24) nach Anspruch 1,
    **dadurch gekennzeichnet, dass**
    die Steuereinheit (24) ausgebildet ist, das Rotorpositionssignal mit einer Abtastfrequenz abzutasten, die derart größer oder kleiner ist als eine Umlauffrequenz des Rotors (5), dass sich eine Schwebung aus der Abtastung und dem Rotorpositionssignal ergibt, die kleiner oder gleich eines durch Erfassungsfehler und/oder Bauteiltoleranzen des Elektromotors vorbestimmten Schwankungsintervalls ist.

3.  Steuereinheit (24) nach Anspruch 1 oder 2,
    **dadurch gekennzeichnet, dass**
    die Steuereinheit (24) ausgebildet ist, das Rotorpositionssignal mit einer Abtastfrequenz abzutasten und eine Schwankung der Abtastfrequenz in einem vorbestimmten Schwankungsintervall in Abhängigkeit eines mittels eines Zufallszahlengenerators erzeugten Zahlenwertes zu erzeugen.

4.  Steuereinheit (24) nach einem der vorhergehenden Ansprüche,
    **dadurch gekennzeichnet, dass**
    die Steuereinheit einen Eingang für wenigstens zwei Rotorpositionssignale, jeweils erzeugt von zueinander verschiedenen Rotorpositionssensoren (12, 14, 16, 18, 20) aufweist und die Steuereinheit (24) ausgebildet ist, wenigstens einen Erfassungsmuster-Datensatz (29) für zueinander verschiedene Winkelstellungen des Rotors entlang eines Rotorumlaufes vorrätig zu halten, wobei jeder Erfassungsmuster-Datensatz (29) Rotorpositionssignale der Rotorpositionssensoren (12, 14, 16, 18, 20) zu einer vorbestimmten Winkelstellung des Rotors (5) repräsentiert, und die Rotorposition des Rotors (5) in Abhängigkeit einer Häufigkeit, insbesondere einer Häufigkeit eines Übereinstimmens eines durch die Rotorpositionssignale (92, 94, 96, 98, 100) repräsentierten Erfassungsmusters mit dem Erfassungsmuster-Datensatz zu ermitteln.

5.  Steuereinheit (24) nach Anspruch 4,
    **dadurch gekennzeichnet, dass**
    die Steuereinheit (24) ausgebildet ist, für wenigstens eine Winkelstellung wenigstens ein eine fehlerhafte Rotorpositionserfassung repräsentierenden Erfassungsmuster-Datensatz (30) vorrätig zu halten und in Abhängigkeit einer Häufigkeit, insbesondere einer Häufigkeit eines Übereinstimmens eines durch die Rotorpositionssignale (92, 94, 96, 98, 100) repräsentierten Erfassungsmusters mit dem die fehlerhafte Rotorpositionserfassung repräsentierenden Erfassungsmuster-Datensatz (30) die erfasste Rotorposition um einen vorbestimmten Winkel zu korrigieren.

6.  Steuereinheit (24) nach Anspruch 5,
    **dadurch gekennzeichnet, dass**
    die Steuereinheit (24) ausgebildet ist,
    eine Kalibrierung wenigstens eines Rotorpositionssensors (12, 14, 16, 18, 20) in Abhängigkeit des die fehlerhafte Rotorpositionserfassung repräsentierenden Erfassungsmuster-Datensatzes um einen vorbestimmten Winkel zu korrigieren.

7.  Elektromotor (1) mit einer Steuereinheit (24) gemäß einem der vorhergehenden Ansprüche,
    **dadurch gekennzeichnet, dass**
    der Elektromotor (1) einen Stator (7) und einen insbesondere permanentmagnetisch ausgebildeten Rotor (5) und wenigstens einen Rotorpositionssensor (12, 14, 16, 18, 20) aufweist, wobei der Rotorpositionssensor ausgebildet ist, eine Rotorposition des Rotors zu erfassen und ein die Rotorposition repräsentierendes Rotorpositionssignal zu erzeugen, wobei die Steuereinheit (24) mit dem Stator (7) wirkverbunden und ausgebildet ist, den Stator (7), insbesondere Statorspulen (9, 10, 11) des Stators (7), in Abhängigkeit des Rotorpositionssignals zum Drehbewegen des Rotors (5) zu anzusteuern.

8. Verfahren zum Betreiben eines elektronisch kommutierten Elektromotors (1) mit einem Rotor (5) und einem Stator (7), bei dem eine Rotorposition des Rotors (5) mittels wenigstens eines Rotorpositionssensors (12, 14, 16, 18, 20) erfasst wird und ein die Rotorposition repräsentierendes Rotorpositionssignal erzeugt wird und der Stator (7) in Abhängigkeit des Rotorpositionssignals zum Drehbewegen des Rotors (5) angesteuert wird,
**dadurch gekennzeichnet, dass**
die Rotorposition des Rotors (5) in Abhängigkeit einer Wahrscheinlichkeit eines Auftretens eines vorbestimmten Rotorpositionssignalmusters des Rotorpositionssignals, insbesondere mittels einer Monte-Carlo-Methode ermittelt wird.

9. Verfahren nach Anspruch 8,
**dadurch gekennzeichnet, dass**
das Rotorpositionssignal mit einer Abtastfrequenz abgetastet wird, die derart größer oder kleiner ist als eine Umlauffrequenz des Rotors, dass sich eine Schwebung aus der Abtastung und dem Rotorpositionssignal ergibt, die in einem durch Erfassungsfehler und/oder Bauteiltoleranzen des Elektromotors vorbestimmten Schwankungsintervall liegt.

10. Verfahren nach einem der vorhergehenden Ansprüche 8 oder 9,
bei dem der Elektromotor (1) wenigstens zwei jeweils ein Rotorpositionssignal erzeugende Rotorpositionssensoren (12, 14, 16, 18, 20) aufweist und wenigstens ein Erfassungsmuster-Datensatz für eine Winkelstellung des Rotors (5) entlang eines Rotorumlaufes vorrätig gehalten wird, wobei der Erfassungsmuster-Datensatz (29) Rotorpositionssignale der Rotorpositionssensoren zu der vorbestimmten Winkelstellung des Rotors repräsentiert, und der Rotor in Abhängigkeit einer Häufigkeit eines Übereinstimmens des durch die Rotorpositionssignale repräsentierten Erfassungsergebnisses mit dem Erfassungsmuster-Datensatz (29) angesteuert wird, und für die Winkelstellung wenigstens ein eine fehlerhafte Rotorpositionserfassung repräsentierender Erfassungsmuster-Datensatz (30) vorrätiggehalten wird und in Abhängigkeit einer Häufigkeit eines Übereinstimmens des durch die Rotorpositionssignale repräsentierten Erfassungsergebnisses mit dem die fehlerhafte Rotorpositionserfassung repräsentierenden Erfassungsmuster-Datensatz (30) die erfasste Rotorposition um einen vorbestimmten Rotorwinkel korrigiert wird, und der Stator in Abhängigkeit der korrigierten Rotorposition angesteuert wird.

# Fig. 1

EP 2 439 841 A2

**Fig. 2**

**Fig. 3**